# EUROPÄISCHE PATENTANMELDUNG

(11) **EP 3 232 281 A1**
(43) Veröffentlichungstag der Anmeldung: **18.10.2017**
(21) Anmeldenummer: 16165396.9
(22) Anmeldetag: 14.04.2016
(51) Int. Cl.: G05B 19/418, G06F 17/30

(54) **VERFAHREN ZUM PROJEKTIEREN EINES PROJEKTES SOWIE ANORDNUNG ZUR DURCHFÜHRUNG DES VERFAHRENS**

(71) Anmelder: Siemens Aktiengesellschaft, 80333 München (DE)
(72) Erfinder: Milvich, Michael, 68753 Waghäusel (DE); Tröster, Thomas, 91723 Dittenheim (DE)

(57) **Zusammenfassung**

Es wird ein Verfahren vorgeschlagen zum Projektieren eines Projektes, welches eine Automatisierungseinrichtung (4) zum Steuern einer technischen Anlage repräsentiert, wobei in einem auf einem Server (11) hinterlegten Root-Projekt (14) die für die Projektierung der Automatisierungseinrichtung (4) erforderlichen Projektierungsdaten hinterlegt sind, die eine Vielzahl von mit einer eindeutigen Kennung versehenen Objekten (17, 18) umfassen und welche für mehrere Benutzer im Rahmen eines Multiuser-Betriebs bereitgestellt werden. Mittels geeigneter Maßnahmen werden Inkonsistenzen in den Projektierungsdaten in Arbeitskopien (12, 13) des Root-Projekts (14) während eines Multiuser-Betriebs weitgehend vermieden.

## Beschreibung

Die Erfindung betrifft ein Verfahren zum Projektieren eines Projektes, welches eine Automatisierungseinrichtung zum Steuern einer technischen Anlage repräsentiert, wobei in einem auf einem Server hinterlegten Root-Projekt die für die Projektierung der Automatisierungseinrichtung erforderlichen Projektierungsdaten hinterlegt sind. Darüber hinaus betrifft die Erfindung eine Anordnung zur Durchführung des Verfahrens.

Aus dem Siemens-Katalog ST PCS 7, Ausgabe 2014/15 ist ein Prozessleitsystem zur Steuerung einer technischen Anlage bekannt. Dieses Prozessleitsystem weist Engineering-Systeme auf, welche insbesondere vorgesehen sind zum Projektieren von Hard- und/oder Softwarekomponenten, zum Projektieren von Kommunikationsnetzwerken, zum Projektieren von kontinuierlichen und sequenziellen Prozessabläufen, ferner zum Design von Bedien- und Beobachtungsstrategien sowie zum Erstellen von Rezepten für Chargen- bzw. Batchprozesse. Die erforderlichen Projektierungs- bzw. Projektdaten für die Projektierung eines (Automatisierungs-)Projektes, welches die zu entwerfende Automatisierungseinrichtung repräsentiert, sind z. B. in einem Root-Projekt eines Servers hinterlegt. Dabei greifen mehrere Benutzer im Rahmen ihrer jeweiligen angelegten (Projektierungs-)Session auf den Server zu. Die auf dem Server zentral abgelegten, eine Vielzahl von (Automatisierungs-)Objekten aufweisenden Projektdaten sind gewöhnlich aufgrund der Komplexität der zu projektierenden Automatisierungseinrichtung sehr umfangreich. Wegen eines derartigen Multiuser-Betriebs, der umfangreichen Projektdaten sowie aufgrund von Änderungen an den Objekten, die im Rahmen der Sessions bewerkstelligt werden, kann es zu Inkonsistenzen im Projekt kommen. Der vorliegenden Erfindung liegt die Aufgabe zugrunde, ein Verfahren zum Projektieren eines Automatisierungs-Projektes der eingangs genannten Art anzugeben, welches Inkonsistenzen in den Projektierungsdaten in Arbeitskopien des Root-Projekts während eines Multiuser-Betriebs weitgehend vermeidet. Darüber hinaus ist eine Anordnung zur Durchführung des Verfahrens zu schaffen.

Diese Aufgabe wird im Hinblick auf das Verfahren durch die im Anspruch 1 angegebenen, bezüglich der Anordnung durch die im Anspruch 4 angegebenen Maßnahmen gelöst.

Vorteilhaft ist, dass alle im Rahmen von Benutzer-Sessions durchgeführten Änderungen an Objekten überführt werden und im Server als geändertes Root-Projekt für neu anzulegende Sessions oder für bereits angelegte, zu aktualisierende ("upzudatende") Sessions bereitgestellt wird. Sollte sich das Root-Projekt im Server zwischenzeitlich aufgrund von Änderungen an Objekten durch weitere Benutzer geändert haben, geht durch die temporäre Kopie des Root-Projekts nichts verloren. Es werden sowohl die bereits freigeschalteten und somit veröffentlichten ("gepublishten") Änderungen, als auch die noch nicht freigeschalteten Änderungen, die mit den nicht geänderten Objekten zusammenzuführen (zu "mergen") sind, berücksichtigt bzw. zusammengeführt.

In einer Ausgestaltung der Erfindung gemäß der im Anspruch 2 angegebenen Maßnahmen ist vorgesehen, dass vor dem Überschreiben des Root-Projekts mit der temporären Kopie die temporäre Kopie verifiziert wird. Dadurch wird sichergestellt, dass fehlerhafte Projektdaten auf dem Server hinterlegt werden.

In einer weiteren Ausgestaltung der Erfindung gemäß der im Anspruch 3 angegebenen Maßnahmen wird ermöglicht, dass ein Benutzer seine Session, welche er ebenfalls geändert hat, mit dem freigeschalteten (geänderten) Root-Projekt zu aktualisieren ("upzudaten"). Dadurch kann dieser Benutzer seine eigenen bewerkstelligten Änderungen als auch die des geänderten Root-Projektes erkennen.

Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden im Folgenden die Erfindung sowie Ergänzungen und Weiterbildungen näher beschrieben und erläutert.

Es zeigen:
- Figuren 1 bis 5: Schritte zum Anlegen und Ändern von Arbeitskopien eines Root-Projekts,
- Figuren 6 bis 8: Schritte zum Aktualisieren einer Arbeitskopie und
- Figur 9: ein Prozessleitsystem.

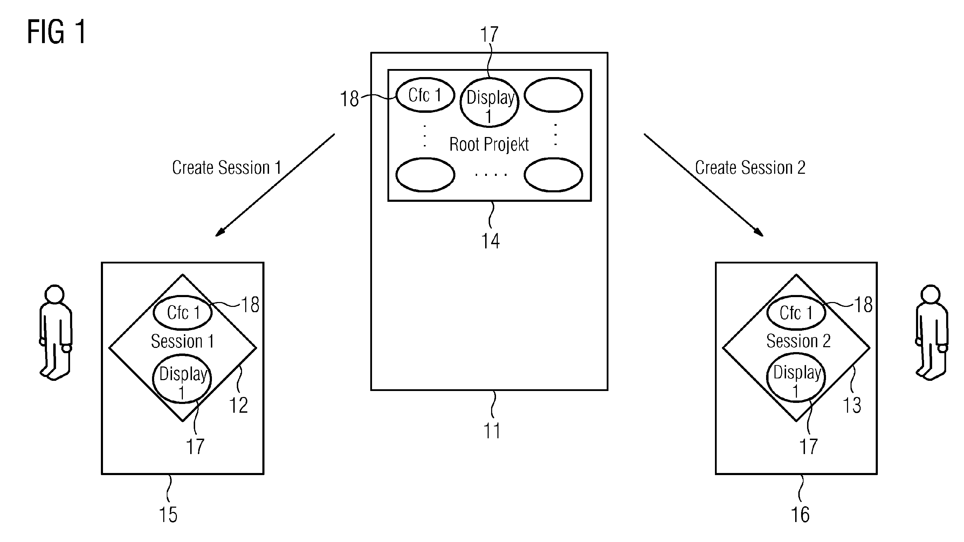

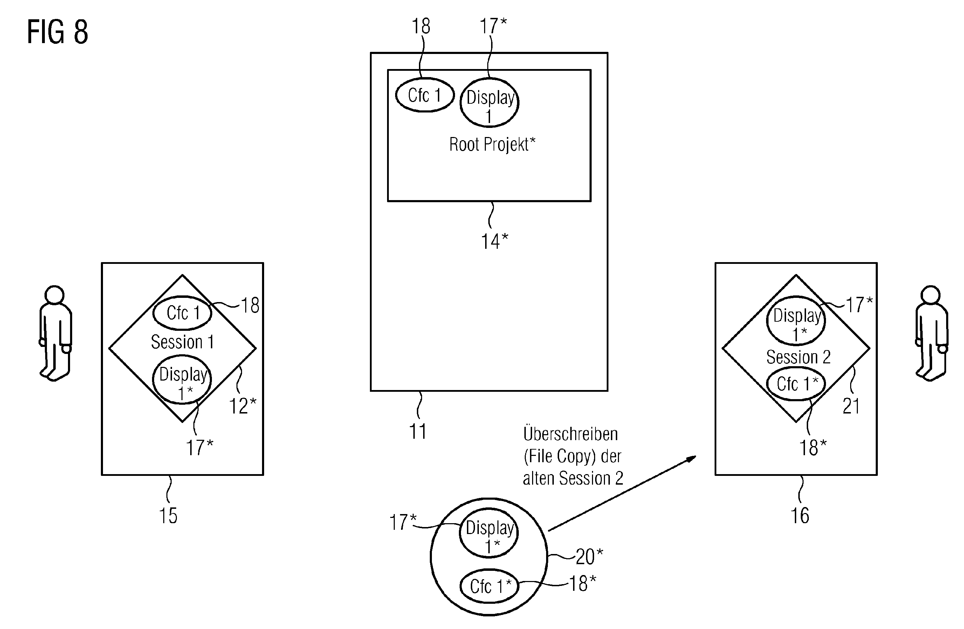

Die in den Figuren 1 bis 9 vorkommenden gleichen Teile sind mit gleichen Bezugszeichen versehen.

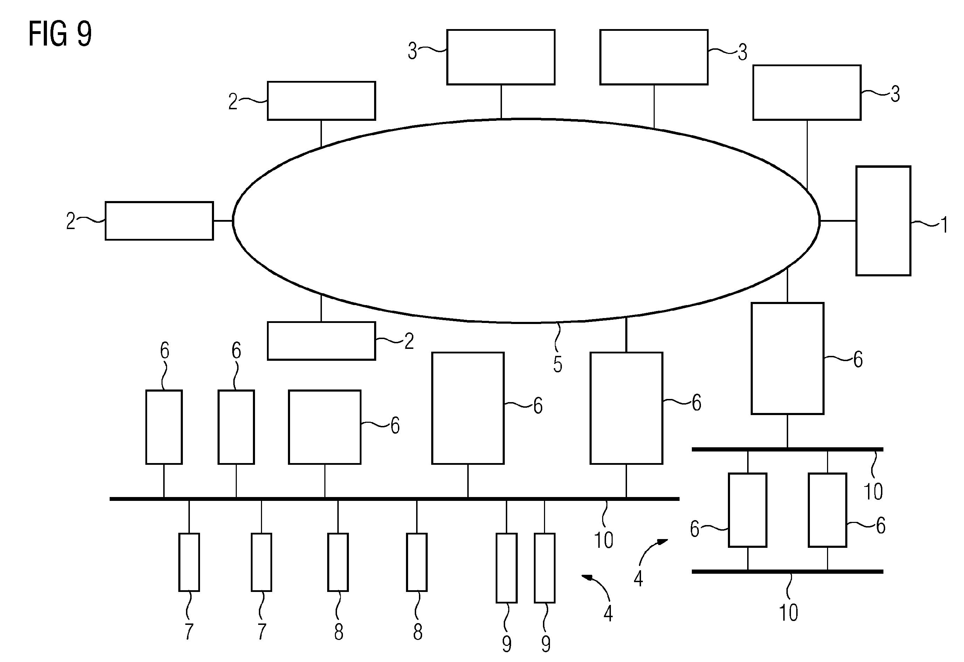

Zunächst wird auf Figur 9 verwiesen, in welcher ein an sich bekanntes Prozessleitsystem PL dargestellt ist. Das Prozessleitsystem PL weist im vorliegenden Ausführungsbeispiel einen (Multiuser-)Server 1, Engineering-Systeme 2, Bedien- und Beobachtungssysteme 3 und eine projektierte und konfigurierte Automatisierungseinrichtung 4 auf, wobei der Server 1 und die Engineering-Systeme 2 zur Projektierung und/oder Konfigurierung der Automatisierungseinrichtung 4 vorgesehen ist. Die Automatisierungseinrichtung 4, welche über ein Bussystem 5 und hier nicht dargestellte Busanschaltungen mit den Engineering-Systemen 2 und den Bedien- und Beobachtungssystemen 3 verbunden ist, umfasst unterschiedliche Automatisierungsgeräte 6, ferner Aktuatoren 7 und Sensoren 8 sowie weitere zur Steuerung einer technischen Anlage erforderliche Automatisierungskomponenten 9. Die Automatisierungsgeräte 6, welche über das Bussystem 5 und/oder weitere geeignete Bussysteme 10 miteinander verbunden sind, können unterschiedlich ausgebildet sein. So sind gewöhnlich Automatisierungsgeräte zur Lösung kleiner, mittlerer und größerer Automatisierungsaufgaben innerhalb der Automatisierungseinrichtung 4 vorgesehen, wobei zur Lösung kleiner Automatisierungsaufgaben mikrospeicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind.

Mit welchen Hard- und Softwarekomponenten, d. h. mit welchen Automatisierungsgeräten, Bedien- und Beobachtungsgeräten, Bussystemen, Aktuatoren und Sensoren, und mit welchen Steuerprogrammen die Automatisierungseinrichtung 4 zu versehen ist, ist abhängig von der Komplexität der zu steuernden technischen Anlage und der Steueraufgabe, wobei die erforderlichen Hard- und Softwarekomponenten der Automatisierungseinrichtung 4 durch die Engineering-Systeme 2 projektierbar und/oder konfigurierbar sind.

Im Folgenden wird auf die Figuren 1 bis 8 verwiesen, in welchen in vereinfachter Form Schritte zum Anlegen und Ändern von Arbeitskopien eines Root-Projekts sowie Schritte zum Aktualisieren einer Arbeitskopie im Rahmen einer Benutzer-Session dargestellt sind.

Es wird angenommen, dass ein erster Benutzer im Rahmen einer ersten Session auf einem Engineering-System 15 eine Bedien- und Beobachtungsstation und ein zweiter Benutzer im Rahmen einer zweiten Session auf einem zweiten Engineering-System 16 ein Steuerprogramm für ein Automatisierungsgerät zu projektieren hat. Dazu werden zunächst mittels eines Servers 11 Arbeitskopien 12, 13 eines auf diesem Server 11 hinterlegten Root-Projektes 14 (Automatisierungsprojektes) für die Benutzer erzeugt. Im vorliegenden Ausführungsbeispiel sind diese Arbeitskopien 12, 13 auf Engineering-Systemen 15, 16 der beiden Benutzer hinterlegt, wobei die Arbeitskopien 12, 13 alle Projektierungsdaten des Root-Projekts 14 umfassen, welche für die Projektierung einer Automatisierungseinrichtung vorgesehen sind. Dazu sind alle für die Projektierung und/oder Konfigurierung erforderlichen Hard- und Softwarekomponenten der Automatisierungseinrichtung auf Anzeigeeinrichtungen der Engineering-Systeme 15, 16 virtuell darstellbar. Beispielsweise sind auf den Anzeigeeinrichtungen darstellbar die Gerätesichten von Automatisierungsgeräten, von Bedien- und Beobachtungssystemen und weiterer Hardwarekomponenten wie z. B. Ein- und Ausgabebaugruppen, von Feldgeräten, von Bussystemen sowie Sichten von Softwarebausteinen zum Erstellen von Steuerprogrammen für die Automatisierungsgeräte.

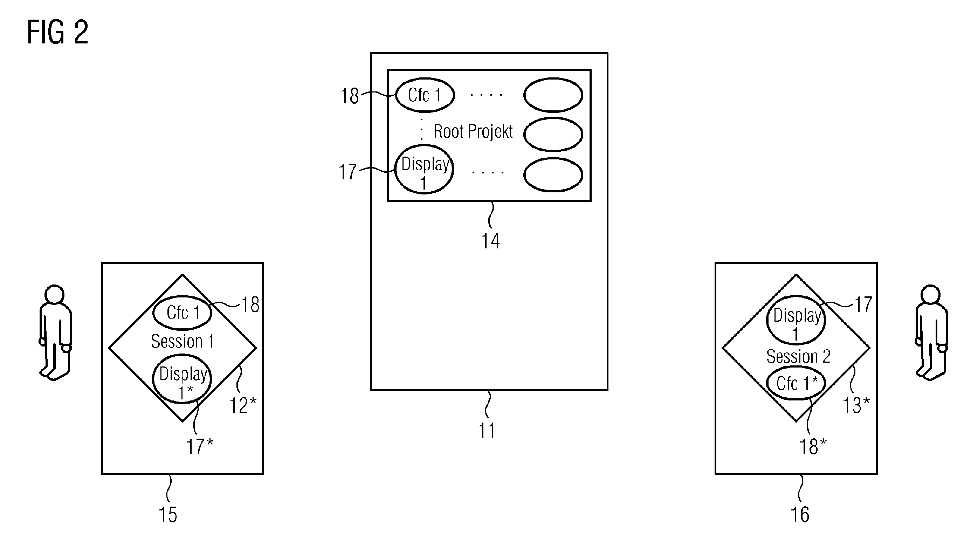

Im vorliegenden Beispiel sind die für die Projektierung der Bedien- und Beobachtungsstation erforderlichen Projektierungsdaten mit 17 (Display) und die für die Projektierung des Steuerprogramms (CFC) erforderlichen Projektierungsdaten mit 18 bezeichnet (Figur 1). Diese Projektierungsdaten umfassen eine Vielzahl von Objekten, die jeweils mit einer eindeutigen Kennung (globally unique identifier) versehen sind. Der Einfachheit halber ist im Folgenden für den Begriff "Projektierungsdaten der Bedien- und Beobachtungsstation (Display) 17" auch der Begriff "Objekt 17" sowie für den Begriff "Projektierungsdaten des Steuerprogramms (CFC) 18" auch der Begriff "Objekt 18" vorgesehen. Es wird angenommen, dass die Benutzer im Rahmen ihrer jeweiligen Projektierungs-Session Änderungen an den jeweiligen Arbeitskopien 12, 13 vorgenommen haben. Wie in Figur 2 veranschaulicht, sind die geänderten Display-Projektierungsdaten mit 17* und die geänderten CFC- Projektierungsdaten mit 18* bezeichnet, wobei der besseren Übersicht halber die geänderten Arbeitskopien mit Bezugszeichen 12* und 13* versehen sind. Eine Änderung kann bewerkstelligt werden, indem der jeweilige Benutzer ein Objekt in seiner Arbeitskopie ändert und/oder ein Objekt löscht und/oder ein neues Objekt hinzufügt, wobei im Falle einer vorgenommenen Änderung das jeweilige Engineering-System 15, 16 eine Änderungsnachricht, welche die eindeutige Kennung des geänderten, gelöschten oder neu hinzugefügten Objekts umfasst, an den Server 11 übermittelt. Aufgrund der mittels des Engineering-Systems 15 an den Server 11 übermittelten Änderungsnachricht markiert der Server 11 automatisch dieses Objekt, wodurch der Server 11 dieses Objekt in der Arbeitskopie 13 des Engineerings-Systems 16 des zweiten Benutzers sowie in allen weiteren Arbeitskopien weiterer Benutzer als "nicht änderbar" bzw. als gesperrt markiert. Nur in der Arbeitskopie 12 des Engineering-Systems 15, welches die Änderungsnachricht an den Server 11 übermittelte, können nach wie vor Änderungen an diesem Objekt vorgenommen werden. Entsprechend bewirkt die Änderungsnachricht des Engineering-Systems 16, dass die Projektierungsdaten 17 (CFC) nicht im Engineering-System 15 des ersten Benutzers sowie in allen weiteren Arbeitskopien weiterer Benutzer geändert werden können. Weitere Änderungen an diesen Projektierungsdaten 17 können lediglich in der Arbeitskopie 13 des zweiten Benutzers vorgenommen werden.

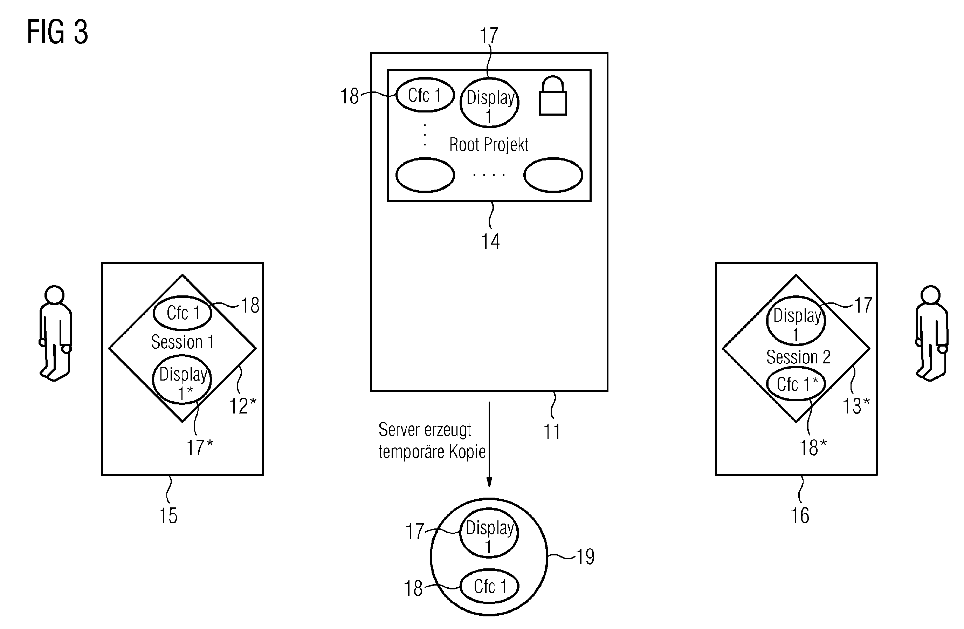

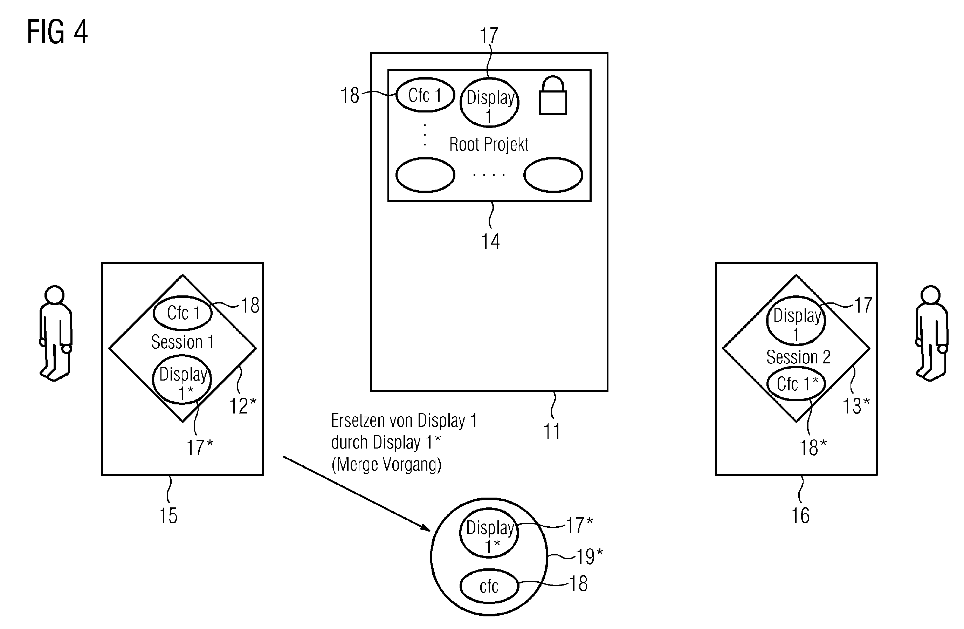

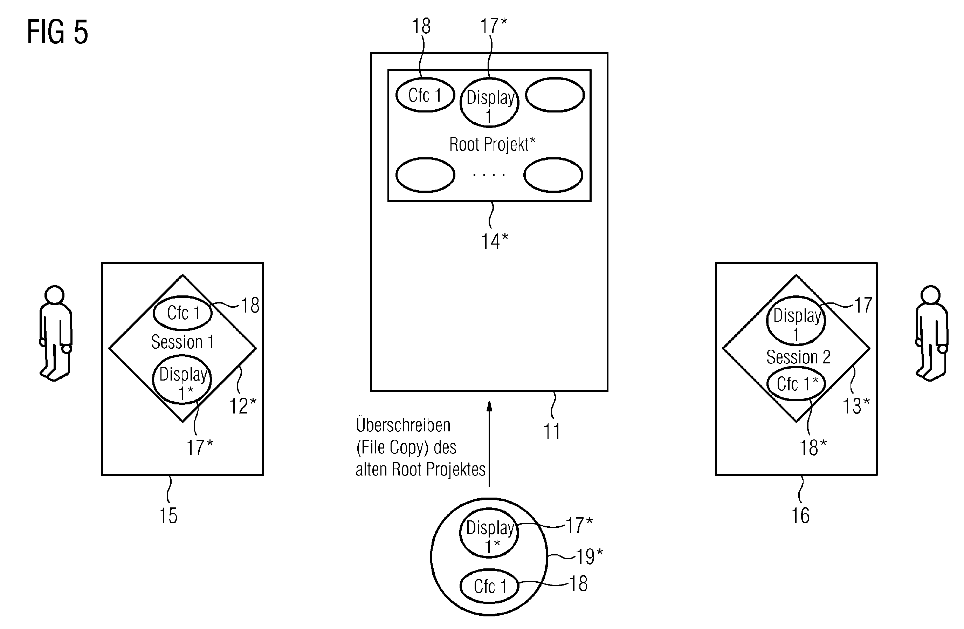

Mittels einer geeigneten Eingabe leitet beispielsweise der erste Benutzer eine Freischaltung bzw. eine Veröffentlichung (Publishing) seiner geänderten Arbeitskopie ein.
Aufgrund einer derartigen Eingabe übermittelt das Engineering-System 15 dem Server 11 ein Freigabesignal, wodurch der Server 11 das Root-Projekt 14 sperrt, eine temporäre Kopie 19 des Root-Projektes 14 erzeugt und diese Kopie dem Engineering-System 15 bereitstellt (Figur 3). Anschließend überträgt das Engineering-System 15 die geänderten Display-Projektierungsdaten 17* in die temporäre Kopie 19, wodurch eine geänderte temporäre Kopie 19* erzeugt wird (Figur 4). Die geänderte temporäre Kopie 19* umfasst zu diesem Zeitpunkt die geänderten Display-Projektierungsdaten 17* sowie die ursprünglichen CFC-Projektierungsdaten 18. In einem nächsten Schritt übermittelt das Engineering-System 15 die geänderte temporäre Kopie 19* - vorzugsweise nach einer entsprechenden Verifizierung der Projektierungsdaten - dem Server 11, welcher ein geändertes Root-Projekt 14* erzeugt, indem der Server 11 das ursprüngliche Root-Projekt 14 mit der geänderten temporären Kopie 19* überschreibt (Figur 5). Das geänderte Root-Projekt 14* umfasst die geänderten Display-Projektierungsdaten 17* sowie die ursprünglichen CFC-Projektierungsdaten 18, wobei das geänderte Root-Projekt 14* nach einer Entsperrung durch den Server 11 für neue Sessions sowie zum Aktualisieren bzw. Updaten von bereits angelegten Sessions bereitsteht.

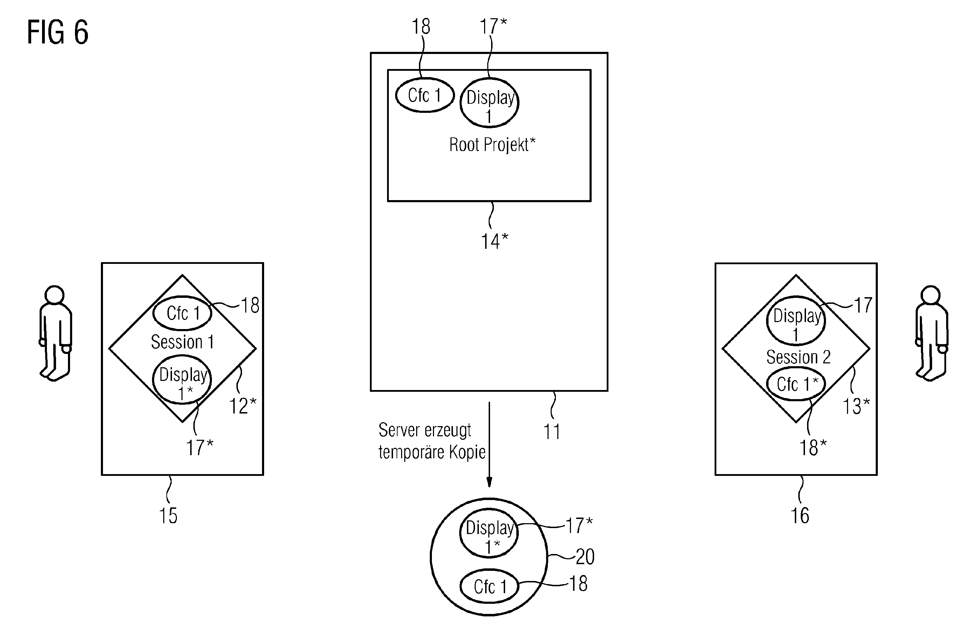

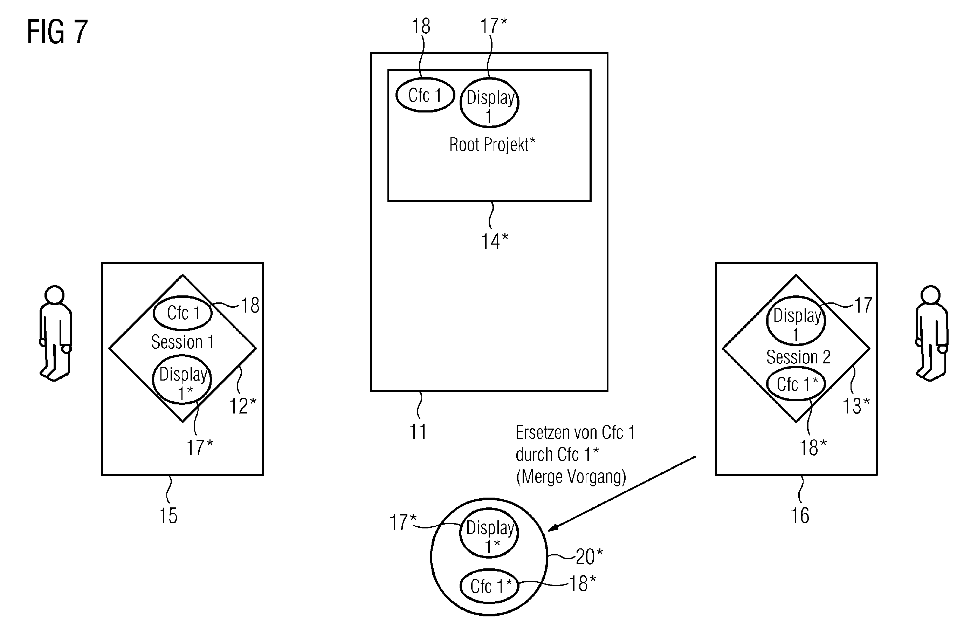

Im Folgenden wird auf die Figuren 6 bis 8 verwiesen, in welchen Schritte zum Aktualisieren der Arbeitskopie 13* mit den im geänderten Root-Projekt 14* hinterlegten, geänderten Projektierungsdaten 17* dargestellt sind.
Mittels einer weiteren geeigneten Eingabe leitet der zweite Benutzer eine Aktualisierung seiner geänderten Arbeitskopie 13* ein. Aufgrund dieser derartigen Eingabe übermittelt das Engineering-System 16 dem Server 11 ein Aktualisierungssignal, wodurch der Server 11 eine weitere temporäre Kopie 20 des Root-Projektes 14* erzeugt und diese Kopie dem Engineering-System 16 bereitstellt (Figur 6). Diese temporäre Kopie 20 entspricht der temporären Kopie 19* (Figur 4 und 5), mittels welcher das ursprüngliche Root-Projekt 14 überschrieben wurde. Die vom zweiten Benutzer geänderten CFC-Projektierungsdaten 18* werden von der weiteren temporären Kopie 20 übernommen, wodurch eine weitere geänderte temporäre Kopie 20* durch das Engineering-System 16 erzeugt wird (Figur 7). Die weitere geänderte temporäre Kopie 20* ersetzt in einem weiteren Schritt die Arbeitskopie 13* der zweiten Session, wodurch diese Arbeitskopie 13* mit den durch den ersten Benutzer geänderten Display-Projektierungsdaten 17* aktualisiert ist, was in der Zeichnung mittels der Arbeitskopie 21 veranschaulicht wird.

Ein Freischalten bzw. eine Veröffentlichung der aktualisierten bzw. upgedateten Arbeitskopie 21 erfolgt in der beschriebenen Art und Weise (vgl. Beschreibung der Figuren 3 bis 5), indem wiederum
a. eine temporäre Kopie des aktuellen Root-Projektes 14* erzeugt und das Root-Projekt 14* für einen Zugriff gesperrt wird,
b. die Änderung 18* in der Arbeitskopie 21 in die temporäre Kopie übernommen,
c. ein geändertes Root-Projekt erzeugt, indem das Root-Projekt 14* mit der geänderten temporären Kopie überschrieben wird und
d. das geänderte Root-Projekt entsperrt wird.

## Patentansprüche

1. Verfahren zum Projektieren eines Projektes, welches eine Automatisierungseinrichtung (4) zum Steuern einer technischen Anlage repräsentiert, wobei in einem auf einem Server (11) hinterlegten Root-Projekt (14) die für die Projektierung der Automatisierungseinrichtung (4) erforderlichen Projektierungsdaten hinterlegt sind, die eine Vielzahl von mit einer eindeutigen Kennung versehenen Objekten (17, 18) umfassen und welche für mehrere Benutzer im Rahmen eines Multiuser-Betriebs bereitgestellt werden, mit folgenden Verfahrensschritten:
a. für jeden Benutzer wird für einen Zugriff auf die Projektierungsdaten eine Arbeitskopie (12, 13) des Root-Projektes (14) erzeugt,
b. für den Fall, dass einer der Benutzer seine Arbeitskopie (12, 13) ändert, indem der Benutzer ein Objekt (17, 18) in seiner Arbeitskopie (12, 13) ändert und/oder ein Objekt löscht und/oder ein Objekt hinzufügt, wird eine Änderungsnachricht, welche die eindeutige Kennung des Objekts (17, 18) umfasst, an den Server (11) übermittelt, aufgrund dessen dieses Objekt (17, 18) mittels des Servers (11) für die anderen Benutzer als nicht änderbar markiert wird,
c. zum Freischalten der geänderten Arbeitskopie (12*) wird
d. eine temporäre Kopie (19) des Root-Projektes (14) erzeugt und das Root-Projekt (14) für einen Zugriff gesperrt,
e. die Änderung in der Arbeitskopie (12) in die temporäre Kopie (19) übernommen,
f. ein geändertes Root-Projekt (14*) erzeugt, indem das Root-Projekt (14) mit der geänderten temporären Kopie (19*) überschrieben wird,
g. das geänderte Root-Projekt (14*) entsperrt.

2. Verfahren nach Anspruch 1, **dadurch gekennzeichnet, dass** vor dem Überschreiben des Root-Projekts (14) mit der geänderten temporären Kopie (19*) diese verifiziert wird.

3. Verfahren nach Anspruch 1 oder 2, **dadurch gekennzeichnet, dass** zum Updaten einer Arbeitskopie (13*) eines weiteren Benutzers mit dem geänderten Root-Projekt (14*) h. eine weitere temporäre Kopie (20) des geänderten Root-Projekts (14*) erzeugt wird,
i. eine Änderung in der Arbeitskopie (13*) des weiteren Benutzers in die weitere temporäre Kopie (20) übernommen wird und
j. die Arbeitskopie (13*) des weiteren Benutzers durch die geänderte weitere temporäre Kopie (20*) ersetzt wird.

4. Anordnung mit einem Server (11) und mit mehreren Engineering-Systemen (15, 16), die kommunikativ mit dem Server (11) verbunden sind, wobei die Anordnung zum Projektieren eines Projektes vorgesehen ist, welches eine Automatisierungseinrichtung (4) einer zu steuernden technischen Anlage repräsentiert, wobei in einem auf dem Server (11) hinterlegten Root-Projekt (14) die für die Projektierung der Automatisierungseinrichtung (4) erforderlichen Projektierungsdaten hinterlegt sind, die eine Vielzahl von mit einer eindeutigen Kennung versehenen Objekten (17, 18) umfassen und welche für jedes der Engineering-Systeme (15, 16) im Rahmen eines Multiuser-Betriebs bereitgestellt werden, wobei,
a. der Server (11) dazu ausgebildet ist, für Benutzer der Engineering-Systeme (15, 16) für einen Zugriff auf die Projektierungsdaten eine Arbeitskopie (12, 13) des Root-Projektes (14) zu erzeugen,
b. das jeweilige Engineering-System (15, 16) dazu ausgebildet ist, für den Fall, dass einer der Benutzer ein Objekt (17, 18) in seiner Arbeitskopie (12, 13) ändert, indem der Benutzer ein Objekt (17, 18) in seiner Arbeitskopie (12, 13) ändert und/oder ein Objekt löscht und/oder ein Objekt hinzufügt, eine Änderungsnachricht, welche die eindeutige Kennung des Objekts (17, 18) umfasst, an den Server (11) zu übermitteln, aufgrund dessen der Server (11) dieses Objekt (17, 18) für die anderen Benutzer als nicht änderbar markiert,
c. der Server (11) dazu ausgebildet ist, zum Freischalten der geänderten Arbeitskopie (12*), eine temporäre Kopie (19) des Root-Projektes (14) zu erzeugen und das Root-Projekt (14) für einen Zugriff zu sperren,
d. das mit der geänderten Arbeitskopie (12*) versehene Engineering-System (15) dazu ausgebildet ist, die Änderung in der Arbeitskopie (12) in die temporäre Kopie (19) zu übernehmen und zum Erzeugen eines geändertes Root-Projektes (14*) die geänderte temporäre Kopie (19*) zum Überschreiben des Root-Projektes (14) dem Server (11) zu übermitteln, und
e. der Server (11) ferner dazu ausgebildet ist, das geänderte Root-Projekt (14*) zu entsperren.

5. Anordnung nach Anspruch 4, **dadurch gekennzeichnet, dass** das mit dem geänderten Objekt (17*) versehene Engineering-System (15) ferner dazu ausgebildet ist, vor der Übermittlung der geänderten temporären Kopie (19*) diese zu verifizieren.

6. Anordnung nach Anspruch 4 oder 5, **dadurch gekennzeichnet, dass** zum Updaten einer Arbeitskopie (13*) eines weiteren Benutzers mit dem geänderten Root-Projekt (14*) auf einem der Engineering-Systeme (16) des weiteren Benutzers
f. der Server (11) dazu ausgebildet ist, eine weitere temporäre Kopie (20) des geänderten Root-Projekts (14*) zu erzeugen,
g. das Engineering-System (16) dazu ausgebildet ist, eine Änderung in der Arbeitskopie (13*) des weiteren Benutzers in der weiteren temporären Kopie (20) zu übernehmen und anschließend
h. die Arbeitskopie (13*) durch die geänderte temporäre weitere Kopie (20*) zu ersetzen.
